# EUROPÄISCHE PATENTANMELDUNG

(11) **EP 1 860 552 A1**
(43) Veröffentlichungstag der Anmeldung: **28.11.2007**
(21) Anmeldenummer: 06010691.1
(22) Anmeldetag: 23.05.2006
(51) Int. Cl.: G06F 9/445

(54) **Modifizieren eines Softwarestands einer Steuergerätesoftware für ein Steuergerät und Erkennen einer solchen Modifikation**

(71) Anmelder: SIEMENS AKTIENGESELLSCHAFT, 80333 München (DE)
(72) Erfinder: Brüll, Martin, 93092 Barbing (DE); Burger, Thomas, Dr., 93051 Regensburg (DE)

(57) **Zusammenfassung**

Es werden ein Verfahren, ein Datenträger mit einer Software und eine Vorrichtung zum Modifizieren eines Softwarestands einer Steuergerätesoftware (200) für ein Steuergerät, insbesondere für ein Motorsteuergerät (100), vorgeschlagen. Erfindungsgemäß wird eine Position für ein Identifikationslabel (208) innerhalb des Softwarestands festgelegt, wobei das Identifikationslabel (208) eine eindeutige Kennzeichnung enthält, die eine funktionelle Modifikation des Softwarestands repräsentiert. Ferner wird ein Positionslabel (220) an eine vorgegebene Position innerhalb des Softwarestands geschrieben, wobei das Positionslabel (220) eine Angabe der festgelegten Position für das Identifikationslabel (208) enthält. Es werden des Weiteren ein Verfahren und ein Steuergerät zum Erkennen einer Modifikation an einem Softwarestand einer Steuergerätesoftware (200) vorgeschlagen. Dabei wird erfindungsgemäß auf eine vorgegebene Position für ein Positionslabel (220) innerhalb des Softwarestands zugegriffen, wobei das Positionslabel (220) eine Angabe einer festgelegten Position für ein Identifikationslabel (208) innerhalb des Softwarestands enthält und das Identifikationslabel (208) eine eindeutige Kennzeichnung enthält, die eine funktionelle Modifikation des Softwarestands repräsentiert. Ferner wird das Positionslabel (220) ausgelesen. Zusätzlich wird auf die durch das Positionslabel (220) angegebene Position für das Identifikationslabel (208) zugegriffen und das Identifikationslabel (208) ausgelesen.

## Beschreibung

Die vorliegende Erfindung betrifft ein Verfahren, einen Datenträger mit einer Software und eine Vorrichtung zum Modifizieren eines Softwarestands einer Steuergerätesoftware für ein Steuergerät, insbesondere für ein Motorsteuergerät. Die vorliegende Erfindung betrifft ferner ein Verfahren und ein Steuergerät zum Erkennen einer Modifikation an einem Softwarestand einer Steuergerätesoftware.

Die Steuerung von vielfältigen komplizierten Prozessen in modernen Verbrennungskraftmaschinen, insbesondere für Kraftfahrzeuge, zählt zu den wichtigen Anwendungsbereichen der Mikroelektronik. Dabei spielen beispielsweise die Regelungen der elektronischen Zündsysteme und der Leerlauf-Drehzahl sowie die Lambdaregelung eine herausragende Rolle. Aktive Motorregelungen und adaptive Getrieberegelungen sind wesentliche Mittel zur Anpassung der Systeme an die jeweiligen Fahrsituationen. Diese Regelungsmechanismen werden durch moderne Motorsteuergeräte realisiert.

Die Motorsteuergeräte werden durch die Hersteller jeweils mit einer Steuergerätesoftware ausgestattet, die einen genau definierten Softwarestand hat. Dieser Original-Softwarestand wird zu einem bestimmtem Zeitpunkt erzeugt und stellt einen bestimmten Produktstand dar. Der Original-Softwarestand wird als Produkt an Kunden ausgeliefert.

Um den Original-Softwarestand jederzeit genau identifizieren zu können und die Konsistenz verschiedener Softwarestände zu gewährleisten, wird bei der Softwarestanderzeugung aus den Quelldateien heraus eine Kennzeichnung, d. h. ein Label, erzeugt und in den Original-Softwarestand eingetragen. Diese Kennzeichnung erfolgt i. d. R. durch den Eintrag einer aus dem Quellcode berechneten Checksumme, mit deren Hilfe ein bestimmter Softwarestand später genau verifiziert werden kann.

Eine Modifikation des ausgelieferten Original-Softwarestands wird dadurch erkannt, dass im Motorsteuergerät zur Laufzeit eine Checksumme eines im Motorsteuergerät aktuell geladenen Softwarestands einer Steuergerätesoftware berechnet und mit der für einen definierten Original-Softwarestand gültigen Checksumme verglichen wird. Sind die beiden verglichenen Checksummen identisch, dann befindet sich im Motorsteuergerät ein unmodifizierter Originalsoftwarestand. Der Motorbetrieb wird ohne Einschränkungen zugelassen. Weichen die Checksummenwerte voneinander ab, dann ist die aktuell geladene Steuergerätesoftware ein modifizierter Softwarestand. Der Motorbetrieb kann dann u. U. gesperrt werden.

Aufgrund spezifischer Anforderungen der Kunden zur Realisierung bestimmter Funktionalitäten der Motorsteuergerätesoftware kann die Modifikation des Softwarestands der Steuergerätesoftware z. B. durch den Kunden erforderlich und zugelassen sein. Um eine solche Modifikation zu ermöglichen und eine Sperrung des Motorbetriebes auszuschließen, wird daher in der Regel die Checksummenprüfung deaktiviert. Das führt jedoch dazu, dass Modifikationen, d. h. zugelassene und nicht zugelassene, nicht mehr ohne zusätzliche Aktivitäten erkannt werden. Welche Funktionalitäten durch eine Modifikation beeinflusst wurden, kann auch bei einer aktivierten Checksummenprüfung üblicherweise nicht direkt rekonstruiert werden.

Es existieren Werkzeuge, oder sogenannte Software-Tools, mit denen der fertige Original-Softwarestand bequem funktionell modifiziert werden kann und damit eine zugelassene Modifikation realisierbar ist. Häufig werden dazu für eine erforderliche Modifikation von den Herstellern weiterhin die Checksummenprüfungen deaktiviert oder Tools mit einer Funktion zum Neuberechnen und Updaten des Checksummeneintrags zur Verfügung gestellt.

Die Software-Tools können durch die Modifikation des Softwarestands eine Änderung der Funktionalitäten der Steuergerätesoftware herbeiführen, ohne dass auf die Quelldateien des Original-Softwarestandes zurückgegriffen werden muss. D. h., es wird nur der aus den Quelldateien erzeugte Maschinencode der Steuergerätesoftware modifiziert. Das bedeutet, dass eine Checksummenprüfung, basierend auf der aus dem Original-Softwarestand berechneten Checksumme, bei Deaktivierung der Checksummenprüfung oder bei Neuberechnung der Checksumme im Zuge der Modifikation kein Erkennen einer Modifikation mehr ermöglicht. Daraus resultiert, dass beim Auslesen der bisherigen Kennzeichnung des Softwarestands nicht mehr festgestellt werden kann, ob eine Modifikation vorliegt und der Softwarestand verändert wurde. Das Ergebnis ist, dass der Softwarestand nicht mehr ohne Weiteres vor nicht zugelassenen Modifikationen geschützt werden kann. Solche nicht zugelassenen Modifikationen können beispielsweise unkontrollierte, insbesondere durch Hardware-Defekte verursachte Modifikationen sein.

Daher kann bei eventuell auftretenden Fehlfunktionen eines Motorsteuergeräts keine sofortige Diagnose getroffen werden, ob der im Motorsteuergerät befindliche Softwarestand überhaupt ein getesteter und freigegebener Softwarestand ist. Die verbleibende Möglichkeit für das Erkennen einer Modifikation sowie ihrer Art und ihres Umfangs ist damit das aufwändige Auslesen des gesamten Softwarestands.

Der vorliegenden Erfindung liegt die Aufgabe zugrunde, einen guten Schutz gegen ein unzulässiges Modifizieren eines Softwarestands einer Steuergerätesoftware für ein Steuergerät zu ermöglichen.

Diese Aufgabe wird gemäß der technischen Lehre des Anspruchs 1, 7, 17, 18 oder 19 gelöst. Vorteilhafte Ausgestaltungen der Erfindung sind den abhängigen Ansprüchen zu entnehmen.

Erfindungsgemäß wird zum Modifizieren des Softwarestands der Steuergerätesoftware eine Position für ein Identifikationslabel innerhalb des Softwarestands festgelegt. Das Identifikationslabel enthält dabei eine eindeutige Kennzeichnung, die eine funktionelle Modifikation des Softwarestands repräsentiert. Ferner wird ein Positionslabel an eine vorgegebene Position innerhalb des Softwarestands geschrieben. Das Positionslabel enthält eine Angabe der festgelegten Position für das Identifikationslabel. Der Begriff Modifizieren umfasst hier ein funktionelles Modifizieren des Softwarestands, bei dem insbesondere funktionelle Eigenschaften des Softwarestands verändert werden und/oder das Einschreiben des Positions- und Identifikationslabels in den Softwarestand. Die vorliegende Erfindung betrifft sowohl ein Verfahren als auch einen Datenträger mit einer Software als auch eine Vorrichtung zum Modifizieren des Softwarestands.

Zum Erkennen der Modifikation des Softwarestands wird erfindungsgemäß auf die vorgegebene Position für das Positionslabel innerhalb des Softwarestands zugegriffen und das Positionslabel ausgelesen. Des Weiteren wird auf die durch das Positionslabel angegebene Position für das Identifikationslabel zugegriffen und das Identifikationslabel ausgelesen. Die vorliegende Erfindung betrifft sowohl ein Verfahren als auch ein Steuergerät zum Erkennen der Modifikation an dem Softwarestand der Steuergerätesoftware.

Aufgrund der vorliegenden Erfindung kann die Steuergerätesoftware zuverlässig vor unzulässigen Modifikationen und Änderungen geschützt werden. Problematische und gegebenenfalls gefährliche Betriebszustände, die durch die Funktionalität der Steuergerätesoftware gesteuert werden, können wirkungsvoll verhindert werden. Eine Analyse der modifizierten Steuergerätesoftware, um dadurch die Positionen und den Inhalte der Label für unzulässige weitere Modifikationen herauszufinden, wird besonders erschwert. Das missbräuchliche und unkontrollierte Modifizieren der Steuergerätesoftware wird effizient auf technisch einfache Weise unterbunden. Dadurch ist eine Begrenzung eines Risikos gegeben, insbesondere im Hinblick auf eventuelle Gewährleistungsansprüche. Ferner ist es vorteilhafterweise möglich, das in der Steuergerätesoftware steckende Know-how, insbesondere in Bezug auf ihre Funktionalität, wirkungsvoll zu schützen.

Gemäß einer bevorzugten Weiterbildung der Erfindung wird beim Festlegen der Position für das Identifikationslabel diese Position innerhalb eines vorgegebenen Bereichs des Softwarestands festgelegt. Dadurch wird die Sicherheit vor unzulässigen Änderungen weiter erhöht und verbessert. Der vorgegebene Bereich kann ein zusammenhängender oder ein nicht zusammenhängender Bereich sein.

Weiter bevorzugt wird die Position für das Identifikationslabel zufällig festgelegt. Dadurch wird die Sicherheit vor unzulässigen Änderungen noch weiter erhöht und verbessert. Das zufällige Festlegen der Position für das Identifikationslabel kann einfachheitshalber mittels eines Zufallgenerators erfolgen.

Gemäß einer weiteren, bevorzugten Weiterbildung der Erfindung werden das Identifikationslabel und/oder das Positionslabel verschlüsselt. Dieses Verschlüsseln kann insbesondere asymmetrisch erfolgen. Dadurch wird das Herausfinden von Konstellationen der verschiedenen Labels, die eine zulässige Modifikation des Softwarestands repräsentieren, durch Analyse eines modifizierten Softwarestands deutlich erschwert. Selbst wenn in einem Einzelfall zufälligerweise der Inhalt eines der Label entschlüsselt werden könnte, so könnte kein Rückschluss auf die Verschlüsselung selbst gezogen werden.

Die Steuergerätesoftware ist somit auch in diesem Fall vor unzulässigen Modifikationen geschützt.

Bevorzugt wird eine weitere Information festgelegt, die sich aus der funktionellen Modifikation des Softwarestands ergibt. Diese weitere Information wird dem Identifikationslabel hinzugefügt. Die weitere Information kann dann von der Steuergerätesoftware zur Laufzeit überprüft werden, um festzustellen, ob tatsächlich eine zulässige Modifikation vorliegt. Dadurch kann die Sicherheit vor unzulässigen Modifikationen noch weiter verbessert werden. Die weitere Information kann beispielsweise eine Länge des Codes des Softwarestands oder eines Teils des Softwarestands, der insbesondere die funktionelle Modifikation repräsentiert, oder eine Check- oder Quersummenbildung, etc. sein. Sollte daher tatsächlich eine Labelkonstellation, d. h. insbesondere das Positionslabel und das Identifikationslabel mitsamt der weiteren Information, herausgefunden worden sein, die ein zulässige Modifikation des Softwarestands repräsentiert, dann ist diese Labelkonstellation nur für die funktionelle Modifikation gültig, der die weitere Information zugeordnet ist. Für eine weitere, unzulässige funktionelle Modifikation gilt die herausgefundene weitere Information nicht. Diese weitere, unzulässige Modifikation wird daher vorteilhafterweise erkannt. Die herausgefundene Labelkonstellation ist daher für das Einbringen einer unzulässigen Modifikation praktisch wertlos.

Besonders bevorzugt wird der Softwarestand vor dem Festlegen der Position für das Identifikationslabel und dem Schreiben des Positionslabels an die vorgegebene Position innerhalb des Softwarestands insbesondere funktionell modifiziert. Das Modifizieren kann damit in einen unmittelbaren Zusammenhang mit dem Positionlabel und dem Identifikationslabel gebracht werden.

Vorteilhaft wird beim Erkennen der Modifikation vor dem Zugreifen auf die vorgegebene Position für das Positionslabel überprüft, ob der Softwarestand modifiziert wurde. Dadurch kann die Überprüfungsprozedur besonders effizient gestaltet werden, da beim Feststellen, dass keine Modifikation vorgenommen wurde, auch die weitere Überprüfung der Label nicht erforderlich ist.

Besonders vorteilhaft wird zum Überprüfen, ob der Softwarestand modifiziert wurde, eine Checksummen- oder Quersummenprüfung des Softwarestands ausgeführt. Dabei wird eine Checksumme des aktuellen Softwarestands berechnet und die berechnete Checksumme mit einer Checksumme eines Original-Softwarestands verglichen. Der Softwarestand wird dann als nicht modifiziert betrachtet, sofern die berechnete Checksumme der Checksumme des Original-Softwarestands entspricht. Der Softwarestand wird als modifiziert betrachtet, sofern die berechnete Checksumme nicht der Checksumme des Original-Softwarestands entspricht. Diese Verfahrensweise ist besonders einfach und zuverlässig realisier- und durchführbar.

Bevorzugt wird in dem Fall, in dem festgestellt wird, dass der Softwarestand modifiziert wurde, beim Zugreifen auf die vorgegebene Position für das Positionslabel überprüft, ob ein Positionslabel vorhanden ist. Wird dabei erkannt, dass kein Positionslabel vorhanden ist, dann wird eine unzulässige Modifikation erkannt. Dies bedeutet ebenfalls eine besonders einfache und effiziente Überprüfung der Zulässigkeit oder Unzulässigkeit der Modifikation. Das Vorhandensein des Positionslabels kann beispielsweise durch ein Abweichen des an der für das Positionslabel vorgegebenen Position befindlichen Wertes von einem vorgegebenen Defaultwert festgestellt werden.

Besonders bevorzugt ist wenigstens ein Referenzlabel vorhanden. Das Referenzlabel enthält eine Kennzeichnung einer zulässigen Modifikation des Softwarestands. Das ausgelesene Identifikationslabel wird mit dem wenigstens einen Referenzlabel verglichen. Die Modifikation ist dabei dann zulässig, sofern das ausgelesene Identifikationslabel dem wenigstens einen Referenzlabel entspricht, und die Modifikation ist nicht zulässig, sofern das ausgelesene Identifikationslabel nicht dem wenigstens einen Referenzlabel entspricht. Die Überprüfung des Identifikationslabels und der Zulässigkeit der Modifikation ist dadurch besonders leicht und schnell möglich. Das wenigstens eine Referenzlabel ist insbesondere in dem Softwarestand vorhanden und beinhaltet einen Kontrollwert für eine zulässige Modifikation.

Vorteilhafterweise wird bei Erkennen der zulässigen Modifikation des Softwarestands ein Betrieb des Steuergeräts freigegeben. Bei Erkennen der unzulässigen Modifikation des Softwarestands wird der Betrieb des Steuergeräts dagegen gesperrt. Dadurch kann eine gegebenenfalls problematische oder sogar gefährliche Betriebsweise des Steuergeräts zuverlässig unterbunden werden. Zusätzlich kann das Freigeben und Sperren des Betriebs einem Benutzer, beispielsweise optisch, angezeigt werden.

Das wenigstens eine Referenzlabel ist vorteilhafterweise insbesondere asymmetrisch verschlüsselt und wird vor dem Vergleichen des wenigstens einen Referenzlabels mit dem Identifikationslabel entschlüsselt. Dadurch wird ein besonders guter Schutz vor unzulässigen Modifikationen gewährleistet.

Weitere vorteilhafte Ausgestaltungen und Weiterbildungen der Erfindung sind der Beschreibung unter Bezugnahme auf die Zeichnung entnehmbar.

Die Erfindung wird nachfolgend anhand der in den schematischen Figuren der Zeichnung angegebenen Beispiele und Ausführungsbeispiele näher erläutert. Es zeigen dabei:
- Fig. 1: ein Prinzipschema eines Motorsteuergeräts für ein Kraftfahrzeug,
- Fig. 2: ein Prinzipschema eines Aufbaus einer Motorsteuergerätesoftware,
- Fig. 3: ein Prinzipschema eines Ablaufs eines Modifizierens eines Softwarestands der Motorsteuergerätesoftware und
- Fig. 4: ein Prinzipschema eines Ablaufs eines Erkennens einer Modifikation an einem Softwarestand der Motorsteuergerätesoftware.

In den Figuren der Zeichnung sind gleiche bzw. funktionsgleiche Elemente - sofern nichts anderes angegeben ist - mit denselben Bezugszeichen versehen worden.

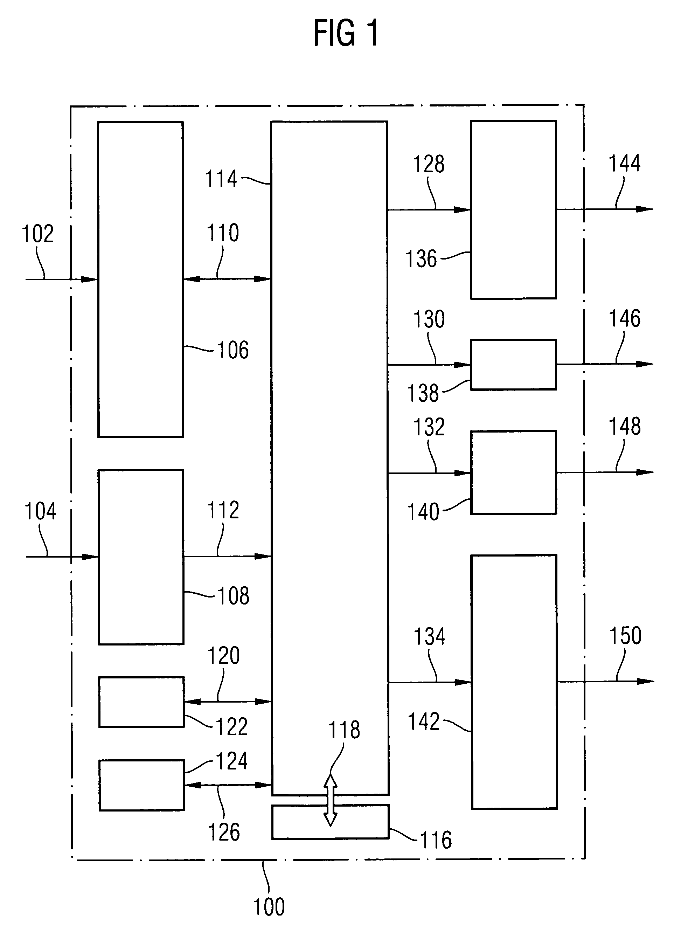

In Fig. 1 zeigt das Prinzipschema einer Motorsteuerung 100 zum Steuern eines Motors eines Kraftfahrzeugs. Bei der Motorsteuerung 100 erfolgen ein Signalfluss 102 von verschiedenen Sensoren und Sollwertgebern, wie z. B. Fahrpedaleinstellung, Drosselklappenstellung, Luftmasse, Batteriespannung, Ansauglufttemperatur, Motortemperatur, Klopfintensität, Lambda-Sonden, und ein Signalfluss 104, wie z. B. Kurbelwellendrehzahl, Nockenwellenstellung, Getriebestufe, Geschwindigkeit, über Input/Output-Ports 106 und 108 und weiter von den Ports 106, 108 über Verbindungen 110 und 112 zu einem Mikrocontroller 114 und seinen Komponenten. In einem OTP (One-Time Programmable)-Block 116 ist ein Programm, d. h. eine Software, gespeichert, welches der Mikrocontroller 114 zum Steuern der Motorsteuerung 100 ausführen soll. Der Datenfluss zwischen Mikrocontroller 114 und OTP-Block 116 erfolgt über eine Verbindung 118. Über eine Verbindung 120 erfolgt ein Datentransfer zwischen dem Mikrocontroller 114 und einem CAN-Bus 122. Der CAN-Bus 122 ermöglicht es, alle Geräte über ein einziges Kabel miteinander zu vernetzen. Ein Datentransfer zwischen dem Mikrocontroller 114 und einem Diagnosesystem 124 erfolgt über eine Verbindung 126.

Der Mikrocontroller 114 mit seinen Komponenten realisiert seine Funktionen auf der Grundlage des im OTP-Block 116 gespeicherten Programms. Nach der Verarbeitung der Signale von den Sensoren und Sollwertgebern 102, 104 im Mikrocontroller 114 erfolgt der weitere Signalfluss vom Mikrocontroller 114 über Verbindungen 128, 130, 132, 134 und über Input/Output-Ports 136, 138, 140, 142 zu verschieden Aktoren 144, z. B. Zündspulen und Zündkerzen, Aktoren 146, z. B. Drosselklappensteller, Aktoren 148, z. B. Einspritzventile und Aktoren 150, z. B. Hauptrelais, Motördrehzahlmesser, Kraftstoffpumpenrelais, Heizung, Lambda-Sonde, Nockenwellensteuerung, Tankentlüftung, Saugrohrumschaltung, Sekundärluft, Abgasrückführung.

Aufgrund ihrer zahlreichen Ein- und Ausgangsgrößen sind diese Regelungen in Kraftfahrzeugen sehr komplex, so dass zur Realisierung der Aufgaben moderne Regelungssysteme auf der Basis von Mikrocontrollern 114 eingesetzt werden. Da in modernen Kraftfahrzeugen immer mehr unterschiedliche Sensoren zum Einsatz kommen, deren Messdaten zeitnah berücksichtigt werden müssen, wurde die Anzahl der Input-/Output-Ports 106, 108, 136, 138, 140, 142 einer Motorsteuerung 100 vergrößert. Daher werden zunehmend Mikrocontroller 114 mit sehr hoher Rechenleistung eingesetzt, wobei die Funktionalitäten der Steuergerätesoftware weiter entwickelbar sind, damit sie in effektiver Weise an spezifische Bedürfnisse von verschiedenen Benutzern angepasst werden können.

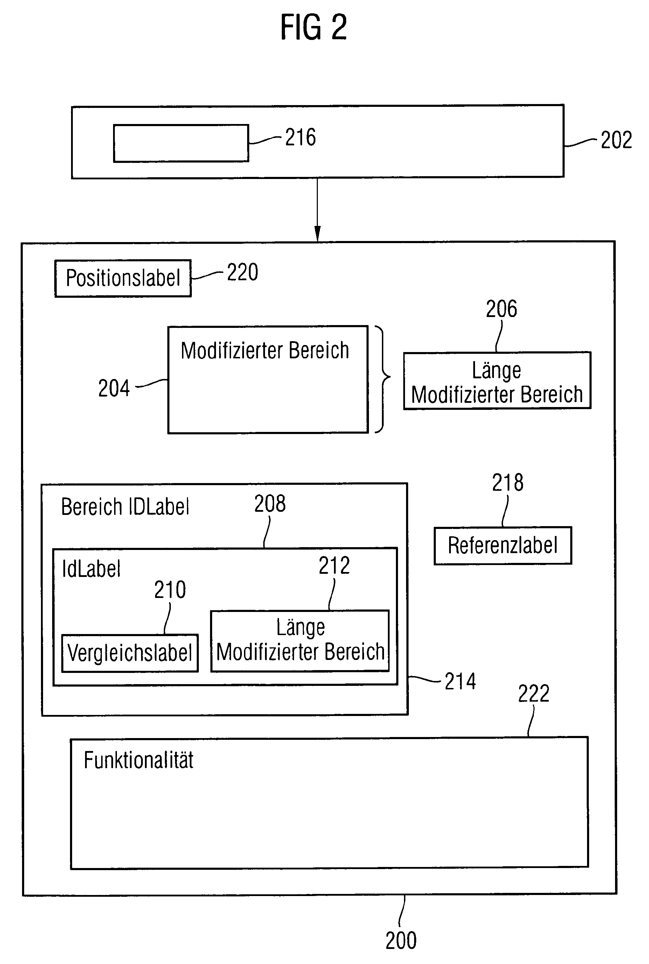

Fig. 2 zeigt das Prinzipschema einer Blockdarstellung von Komponenten einer Steuergerätesoftware 200 zum Steuern der Motorsteuerung 100. Die Steuergerätesoftware 200 ist in ihrem aktuellen Softwarestand in dem OTP-Block 116 abgespeichert, so dass der Mikrocontroller 114 auf sie zugreifen kann. Die Fig. 2 zeigt ferner einen Block 202, der ein Software-Tool repräsentiert, mit dem die Steuergerätesoftware 200 modifiziert werden kann. Ein modifizierter Bereich 204 der Steuergerätesoftware 200 wurde mittels des Software-Tools 202 funktionell modifiziert. In diesem modifizierten Bereich 204 und der durch ihn gegebenen Funktionalität unterscheidet sich dieser aktuelle Softwarestand der Steuergerätesoftware 200 von einem Original-Softwarestand, den die Steuergerätesoftware 200 vor dem Modifizieren durch das Software-Tool 202 hatte. Der modifizierte Bereich 204 hat eine Codelänge 206. Die Steuergerätesoftware 200 weist ein Identifikationslabel 208 auf, das eine eindeutige Kennzeichnung für die durchgeführte Modifikation, insbesondere für deren Art, enthält. Die Kennzeichnung des Identifikationslabel 208 umfasst eine Angabe 210 für ein Vergleichslabel und eine Angabe 212 für die Codelänge 206 des modifizierten Bereichs 204. Das Identifikationslabel 208 wird von dem Software-Tool 202 nach dem Modifizieren der Steuergerätesoftware 200 erzeugt und an eine bestimmte Position oder Stelle der Steuergerätesoftware 200 geschrieben. Diese bestimmte Position wird von dem Software-Tool 202 zufällig innerhalb eines bestimmten vorgegebenen Bereichs 214 für das Einschreiben von Identifikationslabel 208 festgelegt. Dazu enthält das Software-Tool 202 einen Zufallsgenerator 216, mit dem die zufällige Position des Identifikationslabels 208 innerhalb der Steuergerätesoftware 200 bestimmt wird. Die Steuergerätesoftware 200 enthält ferner ein oder mehrere Referenzlabel 218, die Kennzeichnungen von zulässigen Modifikationen des Softwarestands der Steuergerätesoftware 200 enthalten. Die Angabe 210 für das Vergleichslabel enthält hier einen Inhalt, der mit einem der Referenzlabel 218 übereinstimmt. Darüber hinaus weist die Steuergerätesoftware 200 ein Positionslabel 220 auf, das eine Angabe für die bestimmte Position des Identifikationslabels 208 enthält. Das Positionslabel 220 ist innerhalb der Steuergerätesoftware 200 an einer vorgegebenen Position. Die Position des Positionslabels 220 ist fest vorgegeben. Im vorliegenden Ausführungsbeispiel sind die verschiedenen Label, d. h. Identifikationslabel 208, Referenzlabel 218 und Positionslabel 220, asymmetrisch verschlüsselt in der Steuergerätesoftware 200 abgelegt. Dies gewährleistet einen besonders guten Schutz davor, dass die Label entdeckt und ausgelesen werden können, um missbräuchliche Modifikationen am Softwarestand der Steuergerätesoftware 200 vorzunehmen. Es ist aber möglich, auf die Verschlüsselung zu verzichten. Ein Block 222 der Steuergerätesoftware 200 repräsentiert deren Funktionalität, insbesondere zum Erkennen der vorgenommenen Modifikation und ihrer Zulässigkeit oder Unzulässigkeit.

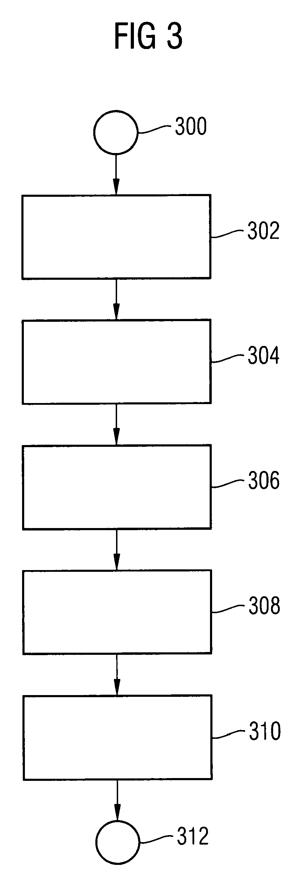

Fig. 3 zeigt das Prinzipschema eines Ablaufdiagramms des Modifizierens des Original-Softwarestands der Steuergerätesoftware. Nach Abschluss des Modifizierens liegt der aktuelle Softwarestand der Steuergerätesoftware 200 vor, wie er anhand der Fig. 2 beschrieben wurde. Das Modifizieren erfolgt mittels des Software-Tools 202. Das Software-Tool 202 kann dazu in einen Computer geladen sein, der an die Motorsteuerung 100 angeschlossen ist.

In einem Schritt 300 beginnt das Modifizieren der Steuergerätesoftware 200. In einem Schritt 302 wird der Original-Softwarestand der Steuergerätesoftware 200 in dem Bereich 204 funktionell modifiziert. Im vorliegenden Beispiel wird eine zulässige funktionelle Modifikation der Steuergerätesoftware 200 vorgenommen. Anschließend wird in einem Schritt 304 das Identifikationslabel 208 erzeugt, dass eine Kennzeichnung enthält, die die funktionelle Modifikation repräsentiert. Das Identifikationslabel 208 kann insbesondere die Art der durchgeführten Modifikation angeben. Zum Erzeugen des Identifikationslabels 208 werden die Angabe 210 für das Vergleichslabel und die Angabe 212 über die Codelänge 206 des Modifikationsbereichs 204 erzeugt. Mittels des Zufallgenerators 216 wird in einem Schritt 306 aus den Positionen des vorgegebenen Bereichs 214 der Steuergerätesoftware 200 zufällig eine Position für das Einschreiben des Identifikationslabels 208 festgelegt. In einem Schritt 308 wird dann das Identifikationslabel 208 an dieser Position in die Steuergerätesoftware 200 geschrieben. In einem nachfolgenden Schritt 310 wird die Angabe für die zufällig festgelegte Position für das Schreiben des Identifikationslabels 208 an die bestimmte fest vorgegebene Position der Steuergerätesoftware 200 für das Positionslabel 220 geschrieben. In den Schritten 308 und 310 werden zudem das Identifikationslabel 208 bzw. das Positionslabel 220 asymmetrisch verschlüsselt und somit verschlüsselt an die jeweiligen Positionen innerhalb der Steuergerätesoftware 200 geschrieben. In einem Schritt 312 ist das Modifizieren des Softwarestands der Steuergerätesoftware 200 beendet.

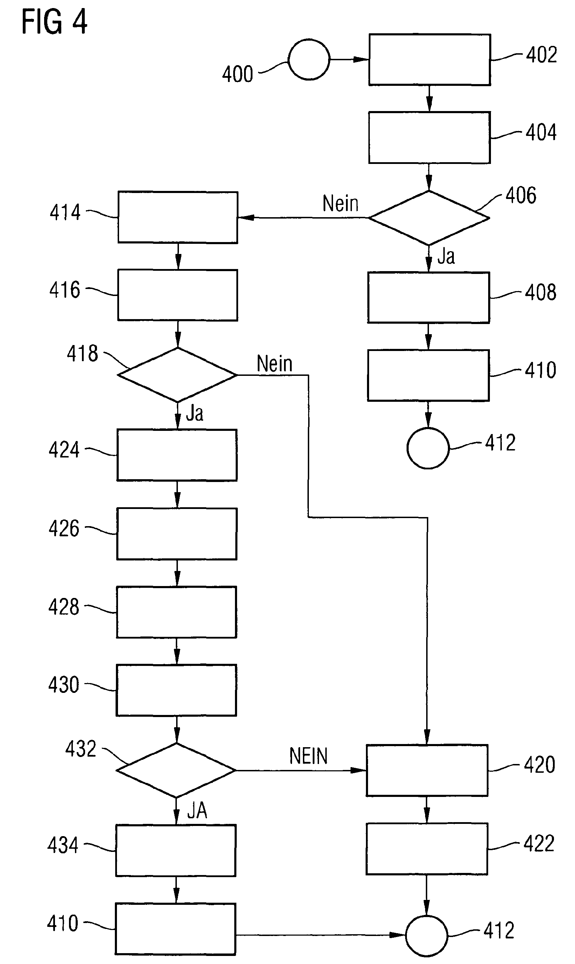

Fig. 4 zeigt das Prinzipschema eines Ablaufdiagramms des Erkennens und Überprüfens des zuvor durchgeführten und anhand der Fig. 3 beschriebenen Modifizierens des Softwarestands der Steuergerätesoftware 200. Dieses Erkennen und Überprüfen wird von der Steuergerätesoftware 200 selbst beim Starten des Motorsteuergeräts 100 durchgeführt.

Die Motorsteuerung 100 wird in einem Schritt 400 gestartet. In einem nachfolgenden Schritt 402 wird die Checksumme des Softwarestands der aktuell in der Motorsteuerung 100 geladenen Steuergerätesoftware 200 berechnet. Diese berechnete Checksumme wird in einem Schritt 404 mit einer in den Original-Softwarestand der Steuergerätesoftware 200 eingetragenen Checksumme verglichen. In einem Schritt 406 wird entschieden, ob die verglichenen Checksummen übereinstimmen oder nicht, d. h. es erfolgt eine Ja-Nein Verzweigung des Verfahrensablaufes.

Sind die in dem Schritt 402 berechnete Checksumme und die in den Original-Softwarestand eingetragene Checksumme identisch, dann wird in einem Schritt 408 die aktuell geladene Steuergerätesoftware 200 als nicht funktionell modifiziert eingestuft. Infolgedessen werden in einem Schritt 410 der Motorbetrieb des Kraftfahrzeugs zugelassen und in einem Schritt 412 das Erkennen und Überprüfen der Modifikation beendet. Wird in dem Schritt 406 festgestellt, dass die berechnete Checksumme nicht mit der in dem Original-Softwarestand eingetragenen Checksumme identisch ist, dann wird in einem Schritt 414 eine funktionelle Modifikation des Softwarestands der aktuell geladenen Steuergerätesoftware 200 erkannt. Diese erkannte Modifikation kann beispielsweise über eine Diagnoselampe optisch signalisiert werden. Nach dem Erkennen der funktionellen Modifikation erfolgt in einem Schritt 416 das Zugreifen auf die Speicherstelle oder die vorgegebene Position innerhalb der Steuergerätesoftware 200, die für das Positionslabel 220 vorgesehen ist. In einem folgenden Schritt 418 wird überprüft, ob das Positionslabel 220 vorhanden ist oder nicht, d. h. es erfolgt eine Ja-Nein Verzweigung des Verfahrensablaufes. Das Feststellen des Vorhandenseins des Positionslabels 220 kann beispielsweise dadurch erfolgen, dass eine Abweichung des an der Position für das Positionslabel 220 befindlichen Wertes von einem vorgegebenen Defaultwert, z. B. "0000", festgestellt wird.

Ist das Positionslabel 220 nicht vorhanden, dann verzweigt das Verfahren zu einem Schritt 420, in dem die festgestellte Modifikation nicht zugelassen wird. In einem Schritt 422 wird der Motorbetrieb des Kraftfahrzeugs gesperrt und das Erkennen und Überprüfen der Modifikation in dem Schritt 412 beendet. Ist das Positionslabel vorhanden, dann verzweigt das Verfahren zu einem Schritt 424, in dem das Positionslabel 220 ausgelesen wird. Dabei wird das verschlüsselt abgespeicherte Positionslabel 220 entschlüsselt. Da das Positionslabel die Position oder Speicherstelle für das Identifikationslabel 208 beinhaltet, wird in einem anschließenden Schritt 426 auf diese angegebene Position für das Identifikationslabel 208 zugegriffen. In einem Schritt 428 wird dann das verschlüsselte Identifikationslabel 208 entschlüsselt und ausgelesen. In Schritt 430 wird der ausgelesene Wert des Identifikationslabels 208 mit vorgegebenen Werten für ein oder mehrere charakteristische Referenzlabel 218 verglichen.

Die Referenzlabel 218 sind in der Steuergerätesoftware 200 enthalten, so dass diese auf einfache Weise auf die Referenzlabel 218 zugreifen kann. Die Referenzlabel 218 können beispielsweise bereits in dem Original-Softwarestand enthalten sein oder bei der Modifikation durch das Software-Tool 202 eingeschrieben worden sein. Im vorliegenden Ausführungsbeispiel sind die Referenzlabel 218 verschlüsselt abgespeichert, so dass sie im Schritt 430 vor dem Vergleichen entschlüsselt werden. Beim Vergleichen im Schritt 430 werden hier sowohl die Angabe 210 für das Vergleichslabel mit den Referenzlabel 218 als auch die Angabe 212 für die Codelänge mit der tatsächlichen Codelänge 206 des modifizierten Bereichs 204 überprüft. In einem Schritt 432 wird entschieden, ob beim Vergleichen in Schritt 430 Übereinstimmungen vorliegen oder nicht, d. h. es erfolgt eine weitere Ja-Nein Verzweigung des Verfahrensablaufs.

Liegen Übereinstimmungen vor, dann wird in einem Schritt 434 die Modifikation als zugelassen eingestuft. Daraufhin wird in dem Schritt 410 der Motorbetrieb zugelassen. Anschließend wird das Erkennen und Überprüfen der Modifikation in dem nachfolgenden Schritt 412 beendet. Liegen keine Übereinstimmungen vor, dann wird zu dem Schritt 420 verzweigt und die Modifikation als nicht zugelassen eingestuft. In dem nachfolgenden Schritt 422 wird dann der Motorbetrieb gesperrt und das Erkennen und Überprüfen der Modifikation in dem anschließenden Schritt 412 beendet.

Zum Schutz der Steuergerätesoftware 200 vor unzulässigen Modifikationen werden das Software-Tool 202 mitsamt seiner Konfigurationen und Algorithmen zum Schreiben der verschiedenen Label und zum Erzeugen der verschiedenen Labelinhalte in kompilierter, d. h. in einer nicht im Klartext vorhandenen Form an einen Benutzer des Software-Tools 202 oder des Steuergeräts übergeben.

## Patentansprüche

1. Verfahren zum Modifizieren eines Softwarestands einer Steuergerätesoftware (200) für ein Steuergerät, insbesondere für ein Motorsteuergerät (100), mit folgenden Schritten:
- Festlegen einer Position für ein Identifikationslabel (208) innerhalb des Softwarestands, wobei das Identifikationslabel (208) eine eindeutige Kennzeichnung enthält, die eine funktionelle Modifikation des Softwarestands repräsentiert, und
- Schreiben eines Positionslabels (220) an eine vorgegebene Position innerhalb des Softwarestands, wobei das Positionslabel (220) eine Angabe der festgelegten Position für das Identifikationslabel (208) enthält.

2. Verfahren nach Anspruch 1,
**dadurch gekennzeichnet,**
**dass** beim Festlegen der Position für das Identifikationslabel (208) diese Position innerhalb eines vorgegebenen Bereichs (214) des Softwarestands festgelegt wird.

3. Verfahren nach Anspruch 1 oder 2,
**dadurch gekennzeichnet,**
**dass** die Position für das Identifikationslabel (208) zufällig festgelegt wird.

4. Verfahren nach einem der vorhergehenden Ansprüche,
**dadurch gekennzeichnet,**
**dass** das Identifikationslabel (208) und/oder das Positionslabel (220) insbesondere asymmetrisch verschlüsselt wird.

5. Verfahren nach einem der vorhergehenden Ansprüche,
**dadurch gekennzeichnet,**
**dass** eine weitere Information (212) festgelegt wird, die sich aus der funktionellen Modifikation des Softwarestands ergibt, und diese weitere Information (212) dem Identifikationslabel (208) hinzugefügt wird.

6. Verfahren nach einem der vorhergehenden Ansprüche,
**dadurch gekennzeichnet,**
**dass** vor dem Festlegen der Position für das Identifikationslabel (208) und dem Schreiben des Positionslabels (220) an die vorgegebene Position innerhalb des Softwarestands der Softwarestand modifiziert wird.

7. Verfahren zum Erkennen einer Modifikation an einem Softwarestand einer Steuergerätesoftware (200) für ein Steuergerät, insbesondere für ein Motorsteuergerät (100), mit folgenden Schritten:
- Zugreifen auf eine vorgegebene Position für ein Positionslabel (220) innerhalb des Softwarestands, wobei das Positionslabel (220) eine Angabe einer festgelegten Position für ein Identifikationslabel (208) innerhalb des Softwarestands enthält und das Identifikationslabel (208) eine eindeutige Kennzeichnung enthält, die eine funktionelle Modifikation des Softwarestands repräsentiert,
- Auslesen des Positionslabels (220),
- Zugreifen auf die durch das Positionslabel (220) angegebene Position für das Identifikationslabel (208) und
- Auslesen des Identifikationslabels (208).

8. Verfahren nach Anspruch 7,
**dadurch gekennzeichnet,**
**dass** das Positionslabel (220) eine Angabe einer zufällig festgelegten Position für ein Identifikationslabel (208) innerhalb des Softwarestands enthält.

9. Verfahren nach Anspruch 7 oder 8,
**dadurch gekennzeichnet,**
**dass** vor dem Zugreifen auf die vorgegebene Position für das Positionslabel (220) überprüft wird, ob der Softwarestand modifiziert wurde.

10. Verfahren nach einem der Ansprüche 7 bis 9,
**dadurch gekennzeichnet,**
**dass** zum Überprüfen, ob der Softwarestand modifiziert wurde, eine Checksummenprüfung des Softwarestands ausgeführt wird, indem
- eine Checksumme des aktuellen Softwarestands berechnet wird,
- die berechnete Checksumme mit einer Checksumme eines Original-Softwarestands verglichen wird, und
- der Softwarestand als nicht modifiziert betrachtet wird, sofern die berechnete Checksumme der Checksumme des Original-Softwarestands entspricht, und der Softwarestand als modifiziert betrachtet wird, sofern die berechnete Checksumme nicht der Checksumme des Original-Softwarestands entspricht.

11. Verfahren nach Anspruch 9 oder 10,
**dadurch gekennzeichnet,**
**dass** in dem Fall, in dem festgestellt wurde, dass der Softwarestand modifiziert wurde, beim Zugreifen auf die vorgegebene Position für das Positionslabel (220) überprüft wird, ob ein Positionslabel (220) vorhanden ist.

12. Verfahren nach einem der Ansprüche 7 bis 11,
**dadurch gekennzeichnet,**
**dass** das Identifikationslabel (208) und/oder das Positionslabel (220) insbesondere asymmetrisch verschlüsselt sind und entschlüsselt werden.

13. Verfahren nach einem der Ansprüche 7 bis 12,
**dadurch gekennzeichnet,**
**dass** wenigstens ein Referenzlabel (218) vorhanden ist, das eine Kennzeichnung einer zulässigen Modifikation des Softwarestands enthält, und das ausgelesene Identifikationslabel (208) mit dem wenigstens einen Referenzlabel (218) verglichen wird, wobei die Modifikation zulässig ist, sofern das ausgelesene Identifikationslabel (208) dem wenigstens einen Referenzlabel (218) entspricht, und die Modifikation nicht zulässig ist, sofern das ausgelesene Identifikationslabel (208) nicht dem wenigstens einen Referenzlabel (218) entspricht.

14. Verfahren nach Anspruch 13,
**dadurch gekennzeichnet,**
**dass** bei Erkennen der zulässigen Modifikation des Softwarestands ein Betrieb des Steuergeräts freigegeben wird und bei Erkennen der unzulässigen Modifikation des Softwarestands der Betrieb des Steuergeräts gesperrt wird.

15. Verfahren nach Anspruch 13 oder 14,
**dadurch gekennzeichnet,**
**dass** das wenigstens eine Referenzlabel (218) insbesondere asymmetrisch verschlüsselt ist und vor dem Vergleichen des wenigstens einen Referenzlabels (218) mit dem Identifikationslabel (208) entschlüsselt wird.

16. Verfahren nach einem der Ansprüche 7 bis 15,
**dadurch gekennzeichnet,**
**dass** das Identifikationslabel (208) eine weitere Information (212) enthält, die sich aus der funktionellen Modifikation (204, 206) des Softwarestands ergibt, und diese weitere Information (212) überprüft wird, wobei die Modifikation zulässig ist, sofern die weitere Information (212) der tatsächlichen funktionellen Modifikation (204, 206) des Softwarestands entspricht, und die Modifikation nicht zulässig ist, sofern die weitere Information (212) nicht der tatsächlichen funktionellen Modifikation (204, 206) entspricht.

17. Datenträger mit einer Software zum Modifizieren eines Softwarestands einer Steuergerätesoftware (200) für ein Steuergerät, insbesondere für ein Motorsteuergerät (100), wobei die Software so ausgestaltet ist, dass bei ihrem Ausführen
- eine Position für ein Identifikationslabel (208) innerhalb des Softwarestands festgelegt wird, wobei das Identifikationslabel (208) eine eindeutige Kennzeichnung enthält, die eine funktionelle Modifikation des Softwarestands repräsentiert, und
- ein Positionslabel (220) an eine vorgegebene Position innerhalb des Softwarestands geschrieben wird, wobei das Positionslabel (220) eine Angabe der festgelegten Position für das Identifikationslabel (208) enthält.

18. Vorrichtung zum Modifizieren eines Softwarestands einer Steuergerätesoftware (200) für ein Steuergerät, insbesondere für ein Motorsteuergerät (100), wobei die Vorrichtung so ausgestaltet ist, dass
- eine Position für ein Identifikationslabel (208) innerhalb des Softwarestands festlegbar ist, wobei das Identifikationslabel (208) eine eindeutige Kennzeichnung enthält, die eine funktionelle Modifikation des Softwarestands repräsentiert, und
- ein Positionslabel (220) an eine vorgegebene Position innerhalb des Softwarestands schreibbar ist, wobei das Positionslabel (220) eine Angabe der festgelegten Position für das Identifikationslabel (208) enthält.

19. Steuergerät, insbesondere Motorsteuergerät (100), zum Erkennen einer Modifikation an einem Softwarestand einer Steuergerätesoftware (200), wobei das Steuergerät so ausgestaltet ist, dass
- auf eine vorgegebene Position für ein Positionslabel (220) innerhalb des Softwarestands zugreifbar ist, wobei das Positionslabel (220) eine Angabe einer festgelegten Position für ein Identifikationslabel (208) innerhalb des Softwarestands enthält und das Identifikationslabel (208) eine eindeutige Kennzeichnung enthält, die eine funktionelle Modifikation des Softwarestands repräsentiert,
- das Positionslabel (220) auslesbar ist,
- auf die durch das Positionslabel (220) angegebene Position für das Identifikationslabel (208) zugreifbar ist und
- das Identifikationslabel (208) auslesbar ist.
